# FASCICULE DE BREVET EUROPEEN

(11) **EP 3 653 929 B1**
(45) Date de publication et mention de la délivrance du brevet: **25.12.2024**
(21) Numéro de dépôt: 19208473.9
(22) Date de dépôt: 12.11.2019
(51) Int. Cl.: F21V 8/00, G02F 1/1335

(54) **DISPOSITIF D'ECLAIRAGE COMPATIBLE D'EQUIPEMENT(S) DE VISION NOCTURNE**
BELEUCHTUNGSVORRICHTUNG, DIE MIT NACHTSICHTGERÄTEN KOMPATIBEL IST
LIGHTING DEVICE COMPATIBLE WITH NIGHT VISION DEVICE(S)

(30) Priorité: 15.11.2018 FR 1871851
(43) Date de publication de la demande: 20.05.2020
(73) Titulaire: Thales, 92400 Courbevoie (FR)
(72) Inventeur: TORAILLE, Vincent, 38430 MOIRANS (FR); LEBRUN, Hugues, 38500 COUBLEVIE (FR)
(74) Mandataire: Atout PI Laplace

(56) Documents cités:
- FR-A1- 2 562 697
- US-A- 5 442 522
- US-A1- 2005 248 734
- US-A1- 2007 058 392
- US-A1- 2008 239 203
- US-A1- 2012 230 050
- US-A1- 2013 322 114
- US-B1- 6 574 030

## Description

### DOMAINE TECHNIQUE

L'invention concerne un dispositif d'éclairage à diodes électroluminescentes pour écrans plats de visualisation du type à matrice de cristaux liquides ("matrice LC" dans la suite), qui propose deux modes de rétro-éclairage de la matrice LC, l'un adapté à une utilisation (observation) de l'écran de jour, et l'autre adapté à une utilisation de nuit et compatible avec des équipements dits "NVIS" (*Night Vision Imaging System*) comme par exemple des jumelles de vision nocturne à amplification de lumière dites jumelles "NVG" (acronyme pour *Night Vision Google*)*.* L'invention s'applique notamment aux dispositifs de de visualisation, y compris tête haute (HUD), utilisés dans les cockpits d'aéronefs.

### ETAT DE LA TECHNIQUE

Les deux modes diurne et nocturne de rétro-éclairage de matrice LC ont chacun leur problématique. Si dans les deux cas, on recherche une bonne uniformité du rétro-éclairage (c'est-à-dire de l'éclairage de toute la surface arrière de matrice LC), car cela conditionne la qualité optique de l'image, pour le mode diurne, on a besoin d'une lumière blanche avec une très forte luminosité, pour avoir suffisamment de contraste comparé à la très forte luminosité que l'on a, de jour, à l'intérieur du cockpit d'un aéronef ; alors que pour le mode nocturne, on a besoin de peu de puissance lumineuse, mais le spectre d'émission doit être en dehors de la bande infrarouge ou proche infrarouge, pour être compatible de l'observation de l'écran avec des équipements NVIS tels que des jumelles NVG.

Dans les technologies les plus récentes, les sources d'éclairage sont à base de diodes électroluminescentes. La source diurne peut ainsi comprendre un ensemble de diodes électroluminescentes blanches ; ou bien des arrangements de diodes qui émettent dans des couleurs différentes, par exemple des arrangements de diodes RVB "rouge", "vert", "bleu", ce qui permet généralement d'obtenir une meilleure colorimétrie. Le nombre de diodes utilisées dépend de la place disponible et de la puissance des diodes pour répondre au besoin en puissance lumineuse et assurer au mieux l'homogénéité de l'éclairage sur toute la face arrière de la matrice LC. La source nocturne peut utiliser une source d'éclairage conçue pour émettre dans le spectre admissible. Une autre réalisation connue utilise une ou des diodes blanches associées individuellement ou collectivement à un filtre spécifique appelé filtre "NVIS" qui permet de filtrer le rayonnement infra rouge et proche infrarouge pour fournir en sortie un rayonnement qui a un spectre compatible avec l'utilisation des équipements NVIS. On peut également utiliser des arrangements de diodes RVB, avec un filtre NVIS associé aux diodes rouges.

L'invention est plus particulièrement décrite dans la suite dans un contexte de sources d'éclairage à diodes électroluminescentes, blanches ou de couleur, avec un filtrage NVIS adéquat pour la source nocturne, mais la solution de l'invention pourrait s'appliquer à d'autres sources communément employées, telles que les lampes fluorescentes ou incandescentes.

L'invention concerne plus particulièrement les architectures de dispositifs d'éclairage qui utilisent un même guide de lumière prismatique pour diffuser la lumière fournie par les deux sources de rétro-éclairage, c'est-à-dire la source d'éclairage "diurne" et la source d'éclairage "nocturne".

Un guide de lumière prismatique se présente généralement sous la forme d'un pavé droit transparent (transparence optique) de faible épaisseur (lame mince) disposé sous (à l'arrière de) la matrice LC de l'écran, et il s'agit de transmettre la lumière fournie par chacune des deux sources de rétro-éclairage depuis la face inférieure du guide, pour la diffuser par la face supérieure du guide disposée sous le plan de la matrice LC. Une architecture correspondante est par exemple décrite dans les demandes US 8, 628, 206 ou US 7, 924, 371. On a alors un entrelacement physique des diodes diurnes et nocturnes à l'arrière du guide, ce qui n'est pas optimal en terme en termes de densité de diodes diurnes, car les diodes nocturnes imposent des espacements plus grands, du fait de leur capuchon individuel de filtrage NVIS. Cette configuration n'est pas optimale non plus en terme d'encombrement, car pour assurer une diffusion bien homogène de la lumière en sortie de prisme, il faut placer la carte électronique support des diodes dans un plan assez en arrière du guide, d'autant plus en arrière que la densité de diodes est plus faible.

La demande EP 0 560 614 propose une autre architecture qui utilise un éclairage par la tranche ("*edge lit*") pour la vision nocturne : les diodes de la source d'éclairage nocturne sont placées sur un bord du pavé. On gagne donc sur l'encombrement par rapport à l'architecture précédente : l'écartement des diodes diurnes étant moins contraint (il n'y a plus à tenir compte de l'encombrement des diodes nocturnes), on peut densifier plus le tapis de diodes diurnes. Néanmoins, la distance de recul reste de l'ordre de 10 fois l'épaisseur du guide de lumière. Par exemple, avec un guide de lumière prismatique de quelques millimètres d'épaisseur, la distance de recul du tapis diurne par rapport à la face arrière du guide sera de l'ordre de 4 à 5 centimètres.

Par ailleurs, si on utilise un guide de lumière standard, la diffusion de lumière nocturne par la face supérieure diffusante du guide n'est pas très homogène : presque toute la lumière est extraite à l'entrée du guide. Pour améliorer cela, il faut que l'extraction de lumière se fasse progressivement sur toute la longueur du guide. On parle de guide à gradient d'extraction, ce qui s'obtient par exemple par des microstructures dont l'espacement varie sur la longueur du guide ou par une variation d'épaisseur du guide, dans le sens longitudinal (correspondant à la direction d'injection latérale). Mais il faut compenser ce gradient sur la voie diurne, pour conserver une diffusion homogène sur la voie diurne. On peut faire cela en utilisant une technique dite de "*local dimming*", par laquelle on règle l'intensité de courant délivrée à chaque diode, en fonction de sa position sur l'axe longitudinal d'injection de lumière. C'est une solution assez coûteuse, car il faut intégrer l'électronique de réglage de chaque diode de la source d'éclairage diurne au moins, et prévoir une étape de calibrage correspondante, pour une application ou un produit donné.

Pour améliorer la compacité, la demande WO2016/030217 propose de disposer les diodes d'éclairage diurne en rangée(s) le long d'une face latérale du guide (face d'entrée) et prévoit l'intégration d'un guide de lumière spécifique à la voie nocturne, en forme de lame mince, entre cette face d'entrée et la rangée des diodes diurnes. La fonction de ce guide spécifique est d'extraire la lumière issue d'une diode d'éclairage nocturne (avec filtre) qui est injectée par une face latérale de ce guide spécifique, et qui en ressort par une pluralité de faces diffusantes de ce guide qui sont disposées au niveau et entre les diodes d'éclairage diurne. C'est-à-dire que ce guide de lumière spécifique a pour effet technique de créer des sources ponctuelles de diffusion d'éclairage nocturne, qui sont dispersées parmi ou entre les diodes diurnes, permettant d'injecter la lumière issue de ces sources ponctuelles "nocturnes" par la même face d'entrée du guide de lumière principal que les diodes diurnes. Ce faisant on retrouve au moins en partie les défauts d'un entrelacement physique entre les positions des diodes diurnes et les sources ponctuelles de diffusions nocturnes créées par le guide spécifique. En particulier, du fait de l'entrelacement des faces diffusantes du guide spécifique et des diodes diurnes, la conception et le placement de ce guide spécifique par rapport aux diodes d'éclairage diurne sont délicats si on veut obtenir une bonne homogénéité de la diffusion de lumière pour les deux modes et une puissance suffisante en mode diurne.

Le document US2005/248734 décrit une architecture de projecteur compatible d'une vision de jour et de nuit et utilisant deux sources indépendantes.

Le document US2012/230050 décrit un module d'éclairage d'un écran plat utilisant une forme particulière de guide de lumière.

### RESUME DE L'INVENTION

Un dispositif d'éclairage selon l'invention ne présente pas les différents inconvénients de l'art antérieur. Plus précisément, on propose dans l'invention une architecture qui est basée sur un guide de lumière dont la forme se décompose en deux prismes droits bout à bout dans une direction longitudinale : un prisme droit principal qui est un pavé droit et qui correspond à la forme habituelle d'un guide de lumière prismatique pour matrice LC, avec une face correspondant à une base du pavé qui forme la surface de sortie de lumière (par laquelle la lumière est extraite et diffusée vers la face arrière de la matrice LC) et une face latérale dans un plan orthogonal à la base, qui forme une entrée de lumière principale, pour les deux sources d'éclairage; et un prisme droit auxiliaire dans le prolongement de cette face latérale d'entrée, qui est un prisme droit dont la base a la forme générale d'un triangle isocèle rectangle, et dont les trois faces latérales rectangles sont utilisées, l'une comme face de sortie de lumière de l'étage d'entrée et qui est de mêmes dimensions de rectangle et placée contre, ou se confondant avec, la face d'entrée principale ; et les deux autres faces latérales comme face d'entrée de lumière, chacune pour une source d'éclairage respective et dont l'une au moins est semi-réfléchissante.

L'expression "forme générale de triangle rectangle isocèle" (ou celle utilisée plus loin dans la description "de type prisme droit à base triangle rectangle isocèle") signifie que dans l'invention, des variations d'angle(s) de l'ordre de quelques degrés sont possibles en pratique, en sorte que le triangle n'est plus strictement isocèle rectangle pour permettre une optimisation des caractéristiques de réflexion par le prisme, dans le but d'obtenir une répartition la plus homogène possible de la lumière, sur la face d'entrée principale sur le pavé, quel que soit le mode de vision actif.

Enfin, il paraît opportun de rappeler la définition d'un prisme droit et des termes associés utilisés dans la présente description : solide ayant deux faces polygonales identiques et parallèles, superposées, et que l'on appelle généralement "bases" ; et autant de faces latérales rectangles que de sommets du polygone de base. Ainsi un prisme droit à base rectangulaire correspond à un pavé droit et comporte quatre faces latérales rectangulaires. Un prisme droit à base triangulaire comporte trois faces latérales rectangulaires. Dire qu'une face latérale ou une base du prisme est une face d'entrée ou une face de sortie de lumière signifie qu'elle transmet ou diffuse la lumière de l'extérieur vers l'intérieur du prisme pour la première et de l'intérieur vers l'extérieur pour la seconde, après d'éventuelles réflexions sur les autres faces ou l'autre base du prisme.

Ceci étant précisé, l'invention concerne un dispositif d'éclairage selon la revendication indépendante 1. D'autres modes de réalisation sont définis par les revendications dépendantes.

D'autres caractéristiques, détails et avantages de l'invention ressortiront à la lecture de la description suivante, faite en référence aux dessins annexés à titre d'exemple et qui représentent respectivement :
- la figure 1, est une vue en perspective d'un dispositif d'éclairage selon l'invention selon un premier agencement d'un guide de lumière selon un mode de réalisation de l'invention et de sources d'éclairage diurne et nocturne, pour rétro-éclairer une matrice à cristaux liquides d'un écran plat de visualisation ;
- la figure 2, une vue schématique en vue en coupe de la forme générale du guide de lumière prismatique de la figure 1 ; et
- la figure 3, une vue schématique en perspective du guide de lumière seul ;
- les figures 4 et 5, des schémas montrant le trajet optique dans l'étage d'entrée du guide, du rayonnement issu de la source d'éclairage diurne (figure 4) et de la source d'éclairage nocturne (figure 5) ;
- les figures 6 et 7, une représentation schématique des empilements de couches minces sur les faces latérales d'entrée de lumière de l'étage d'entrée du guide de lumière, qui donnent les caractéristiques semi-réfléchissantes et/ou de filtrage NVIS des faces d'entrée de lumière de l'étage d'entrée du guide ;
- la figure 8, une vue schématique de dessus de la forme générale d'un guide de lumière prismatique à étage d'entrée selon un deuxième mode de réalisation de l'invention et de l'agencement des deux sources de rétro-éclairage relativement à cet étage d'entrée;
- la figure 9, un schéma montrant le trajet optique dans l'étage d'entrée du guide de la figure 8, des rayonnements respectifs diurne et nocturne ; et
- la figure 10, une vue en perspective générale de ce guide selon une variante de mise en oeuvre du deuxième mode de réalisation.

### DESCRIPTION DETAILLEE

Les différentes figures sont représentées dans un repère orienté (x, y, z). Le plan (x, y) correspond au plan de la surface de diffusion de lumière du guide (ou face de sortie) située dans un plan parallèle et sous celui de la matrice à cristaux liquides à éclairer. L'axe z est perpendiculaire au plan (x, y).

Un dispositif d'éclairage selon l'invention adapté pour le rétro-éclairage d'une matrice à cristaux liquides d'un écran plat de visualisation en mode diurne ou bien en mode nocturne et avec compatibilité NVIS, utilise un guide de lumière qui est agencé avec des sources d'éclairage diurne et nocturne, pour éclairer toute la face arrière de la matrice avec la lumière correspondant au mode de vision actif (diurne ou nocturne) de la manière la plus homogène possible et avec le moins de perte de luminance possible dans le guide de lumière. Sauf si l'en est précisé autrement, les sources d'éclairage utilisées sont des sources d'éclairage conventionnelles, formées par au moins une rangée de diodes électroluminescentes qui sont disposées régulièrement sur une carte support et qui émettent dans une direction orthogonale au plan de la carte support (émission vers le haut). Ce sont par exemple des diodes blanches ou de couleur pour la source diurne ; des diodes blanches avec un filtrage NVIS pour la source nocturne, ou des diodes de couleur, RVB, avec un filtrage NVIS associé aux diodes rouges.

Les figures présentées pour faciliter la compréhension de l'invention ne sont qu'indicatives de l'agencement général et des formes des différents éléments d'un dispositif d'éclairage selon l'invention. Elles ne rendent pas compte des dimensions réelles respectives des différents éléments. Egalement, d'une figure à l'autre, il peut également y avoir des changements d'échelle pour un ou tous les éléments.

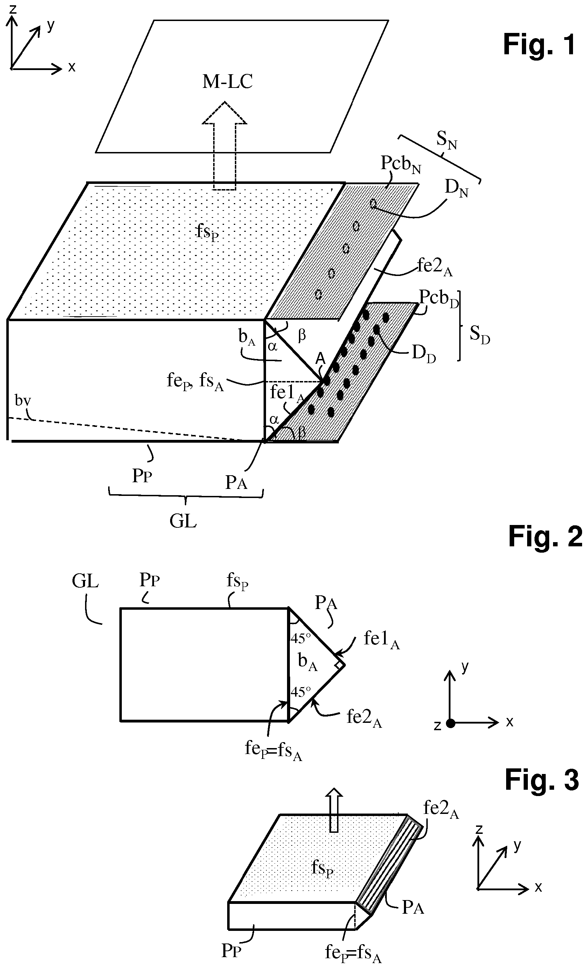

Un guide de lumière selon l'invention est illustré sur la figure 1. Une matrice LC est matérialisée de façon symbolique sur la figure par une surface rectangle M-LC, pour illustrer la fonction du guide de lumière qui est de diffuser la lumière par une face de sortie fsp située sous la face arrière de cette matrice. Cette face de sortie a des dimensions de rectangle au moins égales, et généralement plus grandes, que celles de la matrice pour assurer une illumination de toute la face arrière de matrice LC.

Cette face de sortie fs_{P} correspond à la base rectangle d'une forme de pavé droit P_{P} (prisme droit à base rectangle). Ce pavé droit P_{P} constitue la partie principale d'un guide de lumière selon l'invention, et sa forme et ses dimensions correspondent à celles des guides de lumière de rétro éclairage de l'état de l'art. Les bases du pavé droit P_{P}, dont l'une constitue la face de sortie fs_{P} du guide, sont dans des plans parallèles (x,y) superposés sous le plan de matrice LC. Le pavé droit présente également quatre faces latérales.

Dans l'invention, une seule face latérale du pavé droit, notée fep, est utilisée comme face d'entrée de la lumière pour extraction et diffusion par la face de sortie fs_{P} du pavé droit. Les trois autres faces latérales et la base inférieure du pavé droit sont réfléchissantes (verre poli par exemple), et la base supérieure qui est la face de sortie est une face diffusante (verre dépoli par exemple). Le pavé droit est avantageusement conçu pour permettre une extraction optimale de lumière, vers la face diffusante de sortie fs_{P}, qui soit très homogène sur toute la longueur L du pavé (axe x). Cela peut être obtenu par une technologie de guide de lumière qui permet l'intégration dans la masse de particules diffusantes. Mais la diffusion obtenue avec une injection latérale n'est généralement pas optimale. On utilise de préférence un pavé conçu pour présenter un gradient d'extraction de lumière dans la direction longitudinale x du pavé, correspondant à la direction de l'injection latérale de lumière, depuis la face d'entrée fe_{P} jusqu'à la face opposée. Par exemple, le pavé comprend des microstructures formées par traitement de surface (face inférieure et/ou face supérieure) ou bien dans la masse, et la taille des microstructures et/ou l'espacement entre elles varient pour obtenir le gradient d'extraction souhaité dans la direction d'injection. La fonction de ces microstructures est de faire une rupture de géométrie ou d'interface air/matériau transparent du pavé. Les microstructures peuvent être par exemple (et non exhaustivement) des micro stries orientées orthogonalement par rapport à la direction d'injection de lumière, et d'autant plus rapprochées, que l'on s'éloigne de la face d'entrée latérale ; des micro-points déposés par sérigraphie de peinture diffusante en face arrière ; des micro-trous (ou "bumps") en surface ; ou encore des micro-prismes en face avant. Dans ce cas la fonction de gradient est synthétisée par les variations de taille et/ou de position des microstructures. On peut également réaliser un gradient d'extraction en variant l'épaisseur du pavé sur sa longueur. Par exemple, on peut tailler en biseau la face arrière du pavé (option matérialisée sur la figure 1 par la ligne en pointillé référencée bv).Dans ce cas la face d'entrée latérale principale, utilisée pour l'injection, a la hauteur h du pavé initiale, et cette hauteur diminue progressivement quand on s'approche de la face latérale opposée. On peut aussi combiner une variation d'épaisseur sur la longueur du pavé avec des microstructures.

Selon l'invention, ce prisme droit principal noté P_{P} se prolonge par une de ses faces latérales et dans une direction orthogonale à cette face latérale, par une forme de prisme droit auxiliaire P_{A} à base triangulaire isocèle rectangle. On a ainsi dans une direction longitudinale du guide, deux prismes droits mis bout à bout : le pavé principal, qui offre la surface de sortie fs_{P} du guide de lumière, de diffusion de lumière, et le prisme droit auxiliaire à base triangulaire P_{A} qui sert d'étage d'entrée du guide de lumière pour chacune des deux sources de rétro-éclairage, nocturne et diurne. Cet étage d'entrée P_{A} est ainsi situé sur un bord du pavé droit (et donc de la matrice).

Le prisme droit auxiliaire noté P_{A} est à base de forme générale triangle isocèle rectangle. Il possède donc trois faces latérales de forme rectangle et deux de ses faces latérales sont en principe à angle droit : ce sont celles dont un petit côté de leur forme rectangle correspond à l'un des deux côtés égaux de la forme de base sont à angle droit ; et la troisième face est celle dont le petit côté de sa forme rectangle correspond à l'hypothénuse.

Dans l'invention, ces trois faces latérales du prisme auxilaire P_{A} sont telles que
- une face latérale est une face de sortie fs_{A} du prisme auxiliaire et elle a les mêmes dimensions de rectangle et est accolée ou se confond avec une face latérale du prisme principal P_{P}, qui forme la face d'entrée principale fe_{P} du prisme principal P_{P}. La face de sortie fs_{A} de l'étage d'entrée P_{A} et la face d'entrée fe_{P} de la partie principale P_{P} se confondent lorsque le guide de lumière est formé d'une pièce : par moulage si le guide est réalisé en plastique optique (PMMA, polycarbonate, silicone, etc.) ; ou par usinage (gravure, polissage) si le guide est en verre. Ou bien les deux prismes droits P_{A et} P_{P} sont réalisées séparément puis accolées par ces deux faces fe_{P} et fs_{A}, par collage optique. Dans ce cas, les deux parties sont réalisées de préférence dans le même matériau optique (verre ou plastique optique).
- les deux autres faces latérales forment les faces d'entrée de lumière du prisme auxiliaire P_{A}, chacune étant associée à une source d'éclairage respective.

Dans les figures, à titre d'exemple non limitatif, la face d'entrée notée fe1_{A} est celle associée à la source d'éclairage diurne, et la face d'entrée notée fe1_{B} est celle associée à la source d'éclairage nocturne.

Dans l'invention au moins l'une des faces d'entrée du prisme auxiliaire est semi-réfléchissante, pour permettre une injection du rayonnement de chaque source d'éclairage par une face d'entrée auxiliaire (de l'étage d'entrée) respective mais par la même face d'entrée principale du guide de lumière. De cette façon, on peut extraire la lumière vers la face de sortie fs_{P} du guide avec la même efficacité quelle que soit la source d'éclairage active, ce qui pour assure un rétro éclairage optimal, avec une grande homogénéité en mode de vision nocturne aussi bien qu'en mode de vision diurne.

Les spécificités de l'étage d'entrée du guide selon l'invention, vont maintenant être détaillées dans deux modes de réalisation du guide de lumière selon l'invention avec des agencements respectifs des sources d'éclairage.

Dans toute la suite, on considère des sources d'éclairage qui sont chacune constituées par au moins une rangée de diodes électroluminescentes qui émettent dans une direction orthogonale au plan support de source.

Les figures 1 à 3 montrent un premier mode de réalisation du guide de lumière selon l'invention. On a vu que le prisme droit auxiliaire P_{A} est à base b_{A} en forme de triangle isocèle rectangle : l'angle au sommet A du triangle isocèle rectangle est un angle droit et les deux côtés de longueur égale font un angle de 45 degré avec l'hypothénuse. En pratique, les valeurs d'angle mesurées peuvent donner des valeurs égales ou proches de 45 degrés, sans sortir du cadre de l'invention. Notamment, des ajustements de quelques degrés peuvent permettre d'optimiser les caractéristiques de transmission/réflexion, dans le but d'obtenir une répartition de la lumière sur la face d'entrée principale la plus homogène possible, dans chaque mode.

Dans ce premier mode de réalisation, les deux faces d'entrée fe1_{A} et fe2_{A} sont formées par les deux faces latérales à angle droit, et ces deux faces sont semi-réfléchissantes. La face latérale de sortie fs_{A} est ainsi formée par la face latérale du prisme qui correspond à l'hypothénuse, et cette face est accolée à, ou se confond avec la face latérale d'entrée fe_{P} du pavé principal P_{P}. Les deux faces fep et fs_{A} ont en principe les mêmes dimensions de surface rectangle.

La figure 2 est une vue en coupe zx dans le plan de la base b_{A} du prisme auxiliaire P_{A}, du guide de lumière ainsi formé des deux prismes principal P_{P} et auxiliaire P_{A} bout à bout dans une direction longitudinale (x). La figure 3, qui est une vue en perspective du guide, montre une forme monolithique correspondante : la face de sortie fs_{P} est dans un plan x,y et les deux faces latérales d'entrée de lumière fe1_{A} et fe2_{A} sont par construction, chacune dans des plans inclinés à 45 degrés avec la face de sortie fs_{P} ou la face opposée.

Dans ce mode de réalisation, les sources d'éclairage sont disposées dans des plans parallèles superposés (représentés par le plan de leur carte support respective Pcb_{N} et Pcb_{D}), de part et d'autre du prisme auxiliaire, parallèlement au plan de la face de sortie principale fs_{P} du guide. Elles sont donc disposées chacune à angle droit avec la face latérale de sortie du prisme auxiliaire ; et font chacune un angle β avec la face d'entrée auxiliaire respective, qui par construction est égal à l'angle α entre cette face d'entrée et la face de sortie auxiliaire fs_{A}, soit 45 degrés.

Dans l'exemple, la source d'éclairage nocturne est associée à la face d'entrée fe2_{A} et elles sont placées du côté de la face de sortie fs_{P} (base supérieure) du pavé principal P_{P} ; et la source d'éclairage diurne est associée à la face d'entrée fe1_{A} et elles se trouvent de l'autre côté (base inférieure) du pavé principal P_{P}. On pourrait tout aussi bien avoir la disposition inverse.

Par ailleurs, on a vu que dans ce mode de réalisation, les deux faces d'entrée fe1_{A} et fe2_{A} du prisme auxiliaire sont chacune semi-réfléchissantes. Le traitement semi-réfléchissant de ces faces latérales d'entrée est défini pour permettre une transmission de puissance lumineuse en entrée fe_{P} du pavé principal P_{P} qui est maximale pour le mode diurne. Dans la configuration des figures, la face d'entrée fe1_{A} associée à la source nocturne S_{N} a un fort coefficient T1 de transmission et un faible coefficient de réflexion R1 (R1+T1=100%). Et la face latérale d'entrée fe2_{A} associée à la source diurne a inversement un fort coefficient T2 de transmission et un faible coefficient de réflexion R2 (R2+T2=100%). Pour le rayonnement diurne, le coefficient de transmission T1 par la face fe1_{A} doit être fort, d'au moins 90%, et le coefficient de réflexion R2 par l'autre face fe2_{A} doit être également fort, d'au moins 90%. Par suite des fortes valeurs de T1 et R2, le rayonnement fourni par la source nocturne S_{N} va au contraire être très atténué : à travers la face latérale associée fe2_{A} qui a donc un faible coefficient de transmission T2, au plus de 10%, (complément à 100 de R2), puis par le faible taux de réflexion R1 sur l'autre face latérale fe1_{A}, d'au plus 10%, (complément à 100 de T1). Cette forte atténuation de la puissance du rayonnement nocturne est équilibrée/ajustée avec le nombre de diodes de la source nocturne, pour obtenir le niveau de puissance nécessaire, qui est naturellement faible. On profite ici avantageusement du fait que l'on peut aligner des diodes "nocturnes" sur toute la longueur (selon y) de la face d'entrée principale (= face de sortie auxiliaire).

A titre indicatif, l'épaisseur (ou hauteur) h du pavé P_{P} (lame mince) est généralement de quelques millimètres (3 ou 4 millimètres par exemple), et la longueur de la face d'entré latérale, qui dépend de la dimension de matrice M-LC à rétro-éclairer, peut-être de quelques centimètres pour des petites matrices, jusqu'à plusieurs dizaines de centimètres pour les plus grandes.

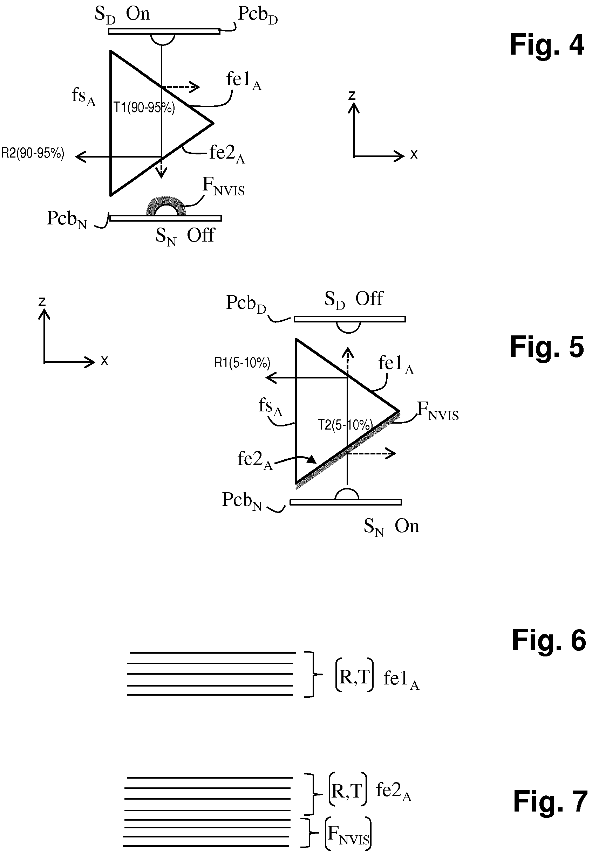

Les trajets optiques des rayonnements diurne et nocturne dans un prisme auxiliaire selon l'invention qui sert d'étage d'entrée pour le guide de lumière, sont schématiquement illustrés sur les figures 4 et 5. La figure 4 correspond au mode de vision diurne : la source diurne est active (S_{D} On) et la source nocturne inactive (S_{N Off}). La source diurne est dans un plan Pcb_{D} incliné à 45 degrés avec la face d'entrée latérale respective fe1_{A} : une majeure partie T1 du rayonnement diurne est transmis par cette face fe1_{A}, vers la face latérale d'entrée fe2_{A} qui en réfléchit une majeure partie R2 vers la face latérale de sortie auxiliaire fs_{A}. La figure 5 correspond au mode de vision nocturne : la source nocturne est active (S_{N} On) et la source diurne inactive (S_{D Off}). La source nocturne est dans un plan Pcb_{N} incliné à 45 degrés avec la face d'entrée respective fe2_{A :} une faible partie T2 du rayonnement nocturne est transmis par cette face fe2_{A}, vers la face latérale d'entrée fe1_{A} qui en réfléchit une faible partie R1 vers la face latérale de sortie auxiliaire fs_{A}.

Le revêtement semi-réfléchissant des faces d'entrée du prisme auxiliaire est réalisé par toute technique connue de l'état de l'art. Il peut notamment consister en un dépôt de couches minces métalliques ou diélectriques, adapté pour lui conférer les taux de réflexion/transmission [R,T] voulus, comme illustré schématiquement sur les figures 6 et 7. Il peut aussi être obtenu par collage sur la face respective, d'un film optique ayant les propriétés de réflexion/transmission [R,T] voulues.

S'agissant du filtre NVIS, noté F_{NVIS} dans les figures, qui est un filtre qui permet de couper les longueurs d'onde dans le rouge et l'infrarouge, il peut être individuel à chaque diode, auquel cas il se présente de manière connue, sous la forme d'un capuchon, comme schématiquement illustré sur les figures 4 et 5 ; ou bien collectif, auquel cas il se présente sous la forme d'un dépôt en couches minces diélectriques assurant la fonction voulue, ou du dépôt d'un filtre optique ayant la fonction de filtrage NVIS, par-dessus le traitement semi-réfléchissant [R,T] de la face d'entrée fe2A associée à la source nocturne, comme illustré sur la figure 7. Cette configuration de filtre collectif est moins coûteuse et permet également de réduire les contraintes en termes d'espacement entre les diodes sur la carte support électronique de source nocturne.

Enfin, on précisera que de même que les angles entre les faces du prisme auxiliaire pourraient avoir des valeurs non strictement égales à celles indiquées, les mesures des différents angles entre les plans des sources et des différentes parties du guide pourraient également ne pas être strictement égales aux valeurs indiquées. Il faut notamment tenir compte des tolérances dans l'assemblage mécanique du guide et des sources d'éclairage. De telles variations sont couvertes par l'invention. Egalement, dans les figures, la source d'éclairage (S_{N}) nocturne est située du même côté que la face de sortie principale (fs_{P}) du guide. Mais on pourrait placer aussi bien placer la source diurne de ce côté, sans sortir du cadre de l'invention.

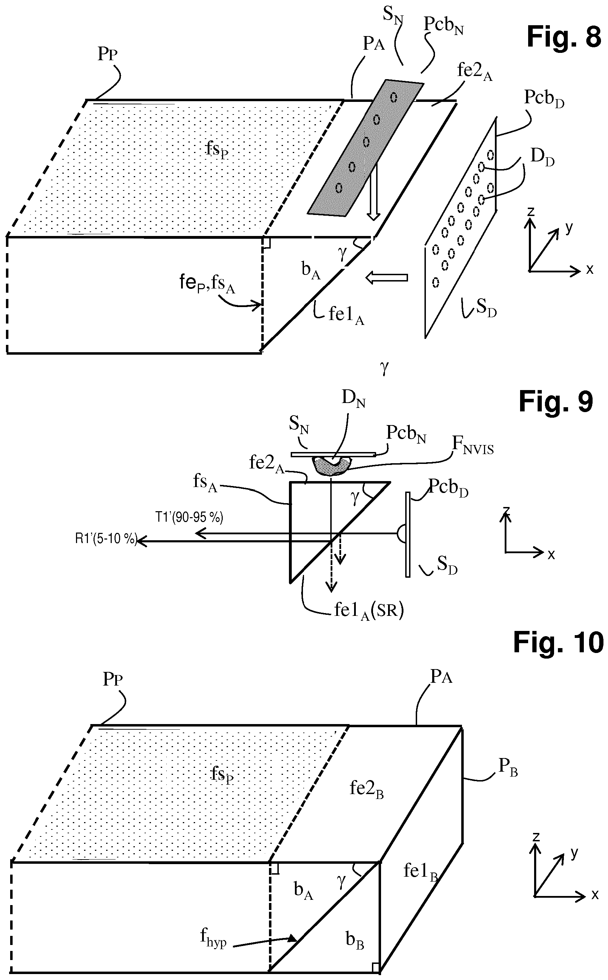

Un deuxième mode de réalisation de l'invention est illustré sur les figures 8 et 9. Dans ce mode, les deux faces latérales du prisme auxiliaire qui sont à angle droit, correspondant aux deux côtés égaux de la forme triangle isocèle rectangle de base de ce prisme, forment l'une, une première face d'entrée auxiliaire, fe2_{A} dans l'exemple et l'autre, la face de sortie auxiliaire fs_{A}. La deuxième face d'entrée auxiliaire, fe1_{A} dans l'exemple, est réalisée par la face latérale du prisme qui correspond à l'hypoténuse du triangle de base : dans ce mode de réalisation les deux faces d'entrée auxiliaire fe1 _{A} et fe2_{A} font un angle γ de 45° et seule la face d'entrée fe1_{A} reçoit un traitement semi-réfléchissant [R,T ].

En reprenant l'exemple illustré où la source diurne est associée à la face fe1_{A}, et la source nocturne est associée à la face fe2, l'agencement des sources par rapport au prisme auxiliaire qui sert d'étage d'entrée du guide de lumière est alors le suivant : la source nocturne et la face d'entrée respective fe2_{A} sont placées dans des plans parallèles superposés, parallèlement au plan de face de sortie fs_{P} du pavé principal. Et la source diurne et la face de sortie auxiliaire fs_{A} sont dans des plans parallèles superposés de part et d'autre de la face latérale d'entrée fe1_{A}.

Dans ce cas, la face latérale d'entrée fe2_{A} associée à la source nocturne ne reçoit pas de traitement semi-réfléchissant, mais elle peut comporter un traitement multicouche (empilement de couches minces) pour réaliser une fonction collective (pour toutes les diodes de la source nocturne) de filtre optique F_{NVIS} comme expliqué en relation avec la figure 7. Un tel filtre collectif permet de placer les diodes de la source nocturne, de façon plus rapprochées, puisqu'elles ne sont plus dotées d'un capuchon individuel de filtrage NVIS.

La figure 9 illustre schématiquement pour ce deuxième mode de réalisation, les trajets optiques et l'application des taux de réflexion R1' et transmission T1' de la face d'entrée fe1_{A} qui permettent d'injecter la lumière avec la puissance adaptée en fonction de la source activée : maximale pour le rayonnement diurne, avec un coefficient T2' d'au moins 90% ; et par suite très atténué, d'un facteur R1' (complément à 100 de T1' - donc au plus 10%) pour le rayonnement nocturne. Lorsque c'est la source nocturne S_{N}, le rayonnement émis par les diodes et filtré (F_{NVIS}) de façon individuelle (figure 9) ou bien collective (figure 7) est transmis sans pertes par la face latérale fe2_{A} (qui est dans un plan orthogonal à la direction du rayonnement) à l'intérieur du prisme auxiliaire, vers l'autre face d'entrée fe1_{A} qui n'en réfléchit que la petite proportion R1' vers la face de sortie fs_{A}. Lorsque c'est la source diurne S_{D}, le rayonnement émis par les diodes est majoritairement transmis par la face latérale fe1_{A} semi-réfléchissante (coefficient de transmission T1 ') vers la face de sortie fs_{A}. En pratique on choisit T1 ' de préférence entre 90 et 95%.

On pourrait inverser la position des sources d'éclairage, et associer la source diurne à la face d'entrée fe2_{A}, et la source nocturne à la face fe1_{A} : alors ce serait T1' qui serait faible, d'au plus 10% et R1' qui serait fort, d'au moins 90%.

Tout ce qui a été dit sur la réalisation de la forme de guide de lumière selon l'invention en deux parties assemblées par collage ou en une seule pièce par usinage ou moulage ; ou sur les valeurs d'angles dans le prisme ou entre les différents éléments de l'assemblage, qui peuvent s'écarter des valeurs théoriques, pour des raisons d'optimisation des caractéristiques de réflexion/transmission, ou pour des raisons de tolérances des procédés de fabrication ou d'assemblage mécanique ; ou sur l'ajustement du nombre de diodes en fonction des pertes en réflexion/transmission pour obtenir la puissance désirée s'applique à ce deuxième mode de réalisation.

D'une manière générale, les sources seront disposées de manière centrée par rapport à leur face d'entrée respective, pour capter le maximum de rayonnement (divergence des diodes). Comme on l'a vu le nombre de diodes sur chaque rangée (voire le nombre de rangées) sera adapté pour chaque source en rapport avec les coefficients de réflexion et transmission qui s'appliquent respectivement pour obtenir la puissance nécessaire en entrée principale fe_{P} pour chaque mode de vision.

On ajoutera que les techniques bien connues de contrôle en courant de chaque diode individuellement (local dimming) peuvent s'appliquer à un dispositif de lumière intégrant un guide de lumière selon l'invention.

Enfin, un dispositif de lumière intégrant un guide de lumière selon l'invention est adapté comme on l'a vu à des sources de lumières à diodes électroluminescentes, qui peuvent être des diodes blanches, mais aussi des diodes électroluminescentes colorées, typiquement rouges, vertes et bleues (avec des filtres sur les diodes rouges pour la source nocturne) ...

La figure 10 illustre une variante applicable au deuxième mode de réalisation, qui a comme avantage de donner une forme générale finale de pavé droit allongé au guide de lumière, ce qui peut simplifier la manipulation et le montage du guide ainsi que l'assemblage mécanique avec les sources d'éclairage. Dans cette variante, on prévoit un troisième prisme droit P_{B}, de forme identique au prisme auxiliaire P_{A}, et on assemble les deux prismes P_{A} et P_{B} par leur face diagonale f_{hyp} pour former un pavé droit. Les deux bases b_{A} et b_{B} ainsi assemblées forment un carré.

Les avantages d'un dispositif d'éclairage selon l'invention à deux modes de vision diurne, et nocturne compatible NVIS sont de permettre de façon simple et peu coûteuse par un guide de lumière à étage d'entrée selon l'invention, à la fois d'assurer une grande homogénéité du rétro-éclairage dans chaque mode avec une puissance adaptée à chaque mode, dans une configuration qui favorise par construction la transmission sur la voie diurne qui est celle qui demande le plus de puissance, tout en conservant un encombrement réduit du fait de l'injection latérale par la même face d'entrée. Notamment on a pu vérifier qu'au moins 81% de la lumière issue de la source diurne est transmis par l'étage d'entrée P_{A} dans le pavé principal P_{P}. Le guide est compatible des techniques de structuration avec gradient de l'état de l'art appliquées au pavé principal permettant de maximiser à la fois l'extraction (rendement global du rétro-éclairage) et l'uniformité d'extraction.

Un dispositif d'éclairage à deux modes de vision diurne et nocturne compatible NVIS selon l'invention offre également une grande compacité. Notamment, l'épaisseur de l'ensemble prisme(s) auxiliaire(s) et sources n'est pas tellement différente de l'épaisseur du pavé principal ; une intégration mécanique facilitée y compris sur le plan de la gestion thermique et de la connectique (vers d'autres cartes).

Tous ces avantages contribuent à une réduction du coût global pour la fabrication du guide et l'intégration des sources pour former le dispositif d'éclairage.

## Revendications

1. Dispositif de rétro-éclairage (1) pour un écran plat de visualisation du type à matrice de cristaux liquide, destiné à être disposé à l'arrière de ladite matrice de cristaux liquides, ledit dispositif étant compatible d'équipements de vision nocturne, et comportant au moins :
une première source d'éclairage (S_{D}) configurée pour un mode de vision diurne, formée d'au moins une rangée de diodes électroluminescentes (D_{D}) alignées parallèlement à une direction Y et émettant dans une direction orthogonale à un plan support (Pcb_{D}) de source;
une deuxième source d'éclairage (S_{N}) configurée pour un mode de vision nocturne, formée d'au moins une rangée de diodes électroluminescentes (D_{N}) alignées parallèlement à la direction Y et émettant dans une direction orthogonale à un plan support (Pcb_{N}) de source, avec un filtre optique (F_{NVIS}) apte à rendre la lumière émise par ladite deuxième source compatible avec l'utilisation d'équipements de vision nocturne et
un guide de lumière (GL) configuré pour diffuser par une face de sortie principale (fs_{P}) disposée selon un plan XY, la lumière fournie par la première ou la deuxième source d'éclairage en fonction d'un mode de vision actif diurne ou nocturne, ladite lumière étant destinée à éclairer une face arrière de ladite matrice de cristaux liquide,
le guide de lumière comprenant une forme principale de prisme droit à bases inférieure (b'_{P}) et supérieure (b_{P}) rectangulaires formant un pavé droit (P_{P}), la base supérieure dudit pavé formant la face de sortie principale (fs_{P}) du guide de lumière, ledit pavé droit comprenant au moins une face latérale (fe_{P}) disposée selon un plan YZ perpendiculairement à ladite face de sortie principale et
l'assemblage du guide de lumière avec la première et la deuxième source d'éclairage étant tel que la lumière émise par chacune des sources est injectée dans ladite forme principale de pavé droit par ladite face latérale (fe_{P}) dudit pavé, dénommée face latérale d'injection,
dans lequel
- la face latérale d'injection de lumière (fe_{P}) dans ledit pavé droit principal (P_{P}) du guide est la même pour la première et la deuxième source d'éclairage et
- la forme du guide de lumière (GL) se décompose en deux formes de prisme droit bout à bout dans une direction longitudinale du guide, comprenant ladite forme de pavé droit principal (P_{P}) et une forme auxiliaire de prisme droit à base triangulaire isocèle rectangle (P_{A}) avec un hypoténuse et deux côtés à angle droit, définissant trois faces latérales de forme rectangle par construction, dont deux faces latérales qui sont à angle droit, avec :
• une première face latérale est une face de sortie (fs_{A}) de lumière dudit prisme auxiliaire, ladite face de sortie (fs_{A}) ayant les mêmes dimensions de rectangle que la face latérale d'injection (fe_{P}) du pavé principal (P_{P}) à laquelle elle est accolée, ou avec laquelle elle se confond ; et
• une deuxième face latérale est une première face d'entrée de lumière (fe1_{A}) pour une source d'éclairage parmi la première et la deuxième source d'éclairage, vers l'intérieur dudit prisme droit auxiliaire en direction d'une autre face latérale du prisme auxiliaire ;
• une troisième face latérale est une deuxième face d'entrée de lumière (fe2_{A}) pour l'autre source d'éclairage, vers l'intérieur dudit prisme auxiliaire en direction de ladite première face d'entrée (fe1_{A}) ; et
- au moins la première face d'entrée est semi-réfléchissante permettant une réflexion de la lumière transmise par ladite deuxième face d'entrée en direction de ladite face de sortie.

2. Dispositif d'éclairage selon la revendication 1, dans lequel lesdites deux faces latérales à angle droit correspondent à la première face d'entrée (fe1_{A}) et la deuxième face d'entrée (fe2_{A}) du prisme auxiliaire et elles sont semi-réfléchissantes, la première face d'entrée de lumière (fe1_{A}) étant une face d'entrée de lumière de la source d'éclairage associée, en direction de la deuxième face d'entrée (fe2_{A}) et la deuxième face d'entrée semi-réfléchissante permettant une réflexion de la lumière transmise par ladite première face d'entrée en direction de ladite face de sortie.

3. Dispositif d'éclairage selon la revendication 2, les première et deuxième sources d'éclairage sont disposées dans des plans parallèles superposés de part et d'autre du prisme auxiliaire, parallèlement au plan de face de sortie (fs_{P}) du pavé droit principal, chacune face à une face d'entrée respective parmi la première et la deuxième face d'entrée du prisme auxiliaire.

4. Dispositif d'éclairage selon l'une des revendications 2 à 3, dans lequel la face d'entrée associée à la source d'éclairage diurne à un traitement semi-réfléchissant configuré pour favoriser un coefficient de transmission T1 par rapport à un coefficient de réflexion R1 de la dite face, avec R1 + T1 = 100 et la face d'entrée associée à la source d'éclairage nocturne à un traitement semi-réfléchissant configuré pour favoriser un coefficient de réflexion R2 par rapport à un coefficient de transmission T2 de la dite face, avec R2 + T2 = 100.

5. Dispositif d'éclairage selon la revendication 4, dans lequel T1 et R2 sont chacun au moins égal à 90 % et/ou compris entre 90 et 95 %.

6. Dispositif d'éclairage selon la revendication 1, dans lequel le prisme auxiliaire a une unique face d'entrée semi-réfléchissante qui est la première face d'entrée et lesdites deux faces latérales à angle droit du prisme auxiliaire correspondent à la face de sortie (fs_{A}) et la deuxième face d'entrée (fe2_{A}) du prisme auxiliaire.

7. Dispositif d'éclairage selon la revendication 6, dans lequel les première et deuxième sources d'éclairage sont disposées dans des plans à angle droit, une source d'éclairage associée à la deuxième face d'entrée étant dans un plan superposé et parallèle au plan de ladite deuxième face d'entrée (fe2_{A}), l'autre source d'éclairage associée à la première face d'entrée (fe1_{A}) étant dans un plan parallèle et superposé au plan de face de sortie (fs_{A}) du prisme auxiliaire, avec la première face d'entrée (fe1_{A}) entre ladite autre source et ladite face de sortie.

8. Dispositif d'éclairage selon la revendication 7, dans lequel la première face d'entrée (fe1_{A}) est associée à la source d'éclairage diurne (S_{D}) et a un traitement semi-réfléchissant configuré pour favoriser un coefficient de transmission T1 par rapport à un coefficient de réflexion R1 de la dite face, avec R1 + T1 = 100.

9. Dispositif d'éclairage selon l'une quelconque des revendications 6 à 8, l'étage d'entrée du guide de lumière comporte un prisme droit complémentaire (P_{B}) de forme identique au prisme auxiliaire (P_{A}), les deux prismes étant accolés de manière à former un pavé droit.

10. Dispositif d'éclairage selon l'une quelconque des revendications 1 à 9, dans lequel la deuxième source d'éclairage (S_{N}), nocturne, est dans un plan parallèle et du même côté que la face de sortie principale (fs_{P}) du guide.

11. Dispositif d'éclairage selon l'une quelconque des revendications 1 à 10 dans lequel le prisme auxiliaire (P_{A}) est assemblé par collage au pavé droit principal (P_{P}).

12. Dispositif d'éclairage selon l'une quelconque des revendications 1 à 10, dans lequel le pavé droit principal (P_{P}) et le prisme auxiliaire (P_{A}) forment une pièce optique monolithique obtenue par moulage ou usinage.

13. Dispositif d'éclairage selon l'une quelconque des revendications précédentes, dans lequel un traitement semi-réfléchissant d'une face d'entrée comprend un dépôt de couches minces métalliques ou diélectriques en surface.

14. Dispositif d'éclairage selon l'une quelconque des revendications précédentes, dans lequel la fonction de filtre optique (F_{NVIS}) associé à la deuxième source d'éclairage est un filtre collectif commun à toutes les diodes de la source nocturne et réalisé par une structure de couches minces diélectriques déposée en surface de la deuxième face latérale d'entrée du prisme auxiliaire d'entrée.

## Patentansprüche

1. Hintergrundbeleuchtungsvorrichtung (1) für einen Flachbildschirm vom Typ mit Flüssigkristallmatrix, die dazu bestimmt ist, auf der Rückseite der Flüssigkristallmatrix angeordnet zu werden, wobei die Vorrichtung mit Nachtsichtgeräten kompatibel ist, und mindestens Folgendes aufweist:
eine erste Beleuchtungsquelle (S_{D}), die für einen Tagessichtmodus konfiguriert ist und aus mindestens einer Reihe von Leuchtdioden (D_{D}) gebildet wird, die parallel zu einer Richtung Y ausgerichtet sind und in einer zu einer Quellenträgerebene (Pcb_{D}) orthogonalen Richtung emittieren;
eine zweite Beleuchtungsquelle (S_{N}), die für einen Nachtsichtmodus konfiguriert ist und aus mindestens einer Reihe von Leuchtdioden (D_{N}) gebildet ist, die parallel zur Y-Richtung ausgerichtet sind und in einer zu einer Quellenträgerebene (Pcb_{N}) orthogonalen Richtung emittieren, mit einem optischen Filter (F_{NVIS}), der geeignet ist, um das von der zweiten Quelle emittierte Licht mit der Verwendung von Nachtsichtgeräten kompatibel zu machen, und
einen Lichtleiter (GL), der so konfiguriert ist, dass er über eine Hauptaustrittsfläche (fsp), die in einer XY-Ebene angeordnet ist, das von der ersten oder der zweiten Beleuchtungsquelle gelieferte Licht in Abhängigkeit von einem aktiven Tag- oder Nachtsichtmodus ausstrahlt, wobei das Licht dazu bestimmt ist, eine Rückfläche der Flüssigkristallmatrix zu beleuchten,
wobei der Lichtleiter eine Hauptform eines geraden Prismas mit rechteckiger unterer (b'_{P}) und oberer (b_{P}) Basis umfasst, die einen Quader (P_{P}) bildet, wobei die obere Basis des Quaders die Hauptaustrittsfläche (fsp) des Lichtleiters bildet, wobei der Quader mindestens eine Seitenfläche (fe_{P}) umfasst, die auf einer Ebene YZ senkrecht zu der Hauptaustrittsfläche angeordnet ist, und
wobei die Baugruppe des Lichtleiters mit der ersten und der zweiten Beleuchtungsquelle derart ist, dass das von jeder der Quellen emittierte Licht in die Hauptform eines Quaders durch die Seitenfläche (fep) des Quaders, die als seitliche Injektionsfläche bezeichnet wird, injiziert wird, wobei
- die seitliche Lichtinjektionsfläche (fep) in den Hauptquader (Pp) des Leiters für die erste und die zweite Beleuchtungsquelle die gleiche ist, und
- sich die Form des Lichtleiters (GL) in zwei Formen eines geraden Prismas gliedert, die in einer Längsrichtung des Leiters aneinandergereiht sind, umfassend die Form eines Hauptquaders (P_{P}) und eine Hilfsform eines geraden Prismas mit gleichschenklig rechtwinkliger dreieckiger Basis (P_{A}) mit einer Hypotenuse und zwei rechtwinkligen Seiten, welche durch Konstruktion drei Seitenflächen mit rechtwinkliger Form definieren, von denen zwei Seitenflächen rechtwinklig sind, wobei:
• eine erste Seitenfläche eine Lichtaustrittsfläche (fs_{A}) des Hilfsprismas ist, wobei die Austrittsfläche (fs_{A}) die gleichen Rechteckabmessungen wie die seitliche Injektionsfläche (fe_{P}) des Hauptquaders (P_{P}) aufweist, an die sie aneinandergefügt ist oder mit der sie zusammenfällt; und
• eine zweite Seitenfläche eine erste Lichteintrittsfläche (fe1_{A}) für eine Beleuchtungsquelle aus der ersten und der zweiten Beleuchtungsquelle ist, zu dem Inneren des geraden Hilfsprismas in Richtung einer anderen Seitenfläche des Hilfsprismas;
• eine dritte Seitenfläche eine zweite Lichteintrittsfläche (fe2_{A}) für die andere Beleuchtungsquelle ist, zu dem Inneren des Hilfsprismas in Richtung der ersten Eintrittsfläche (fe1_{A}); und
- mindestens die erste Eintrittsfläche halbreflektierend ist, was eine Reflexion des durch die zweite Eintrittsfläche in Richtung der Austrittsfläche übertragenen Lichts ermöglicht.

2. Beleuchtungsvorrichtung nach Anspruch 1, wobei die beiden rechtwinkligen Seitenflächen der ersten Eintrittsfläche (fe1_{A}) und der zweiten Eintrittsfläche (fe2_{A}) des Hilfsprismas entsprechen und sie halbflektierend sind, wobei die erste Lichteintrittsfläche (fe1_{A}) eine Lichteintrittsfläche der zugeordneten Beleuchtungsquelle in Richtung der zweiten Eintrittsfläche (fe2_{A}) ist und die zweite halbreflektierende Eintrittsfläche eine Reflexion des durch die erste Eintrittsfläche übertragenen Lichts in Richtung der Austrittsfläche ermöglicht.

3. Beleuchtungsvorrichtung nach Anspruch 2, wobei die erste und die zweite Beleuchtungsquelle in überlagerten parallelen Ebenen auf beiden Seiten des Hilfsprismas angeordnet sind, parallel zur Ebene der Austrittsfläche (fs_{P}) des Hauptquaders, jede gegenüber einer jeweiligen Eintrittsfläche der ersten und der zweiten Eintrittsfläche des Hilfsprismas.

4. Beleuchtungsvorrichtung nach einem der Ansprüche 2 bis 3, wobei die der Tageslichtbeleuchtungsquelle zugeordnete Eintrittsfläche eine halbreflektierende Behandlung aufweist, die so konfiguriert ist, dass sie einen Übertragungskoeffizienten T1 im Verhältnis zu einem Reflexionskoeffizienten R1 der Fläche begünstigt, wobei R1 + T1 = 100, und die der Nachtbeleuchtungsquelle zugeordnete Eintrittsfläche eine halbreflektierende Behandlung aufweist, die so konfiguriert ist, dass sie einen Reflexionskoeffizienten R2 im Verhältnis zu einem Übertragungskoeffizienten T2 der Fläche begünstigt, wobei R2 + T2 = 100.

5. Beleuchtungsvorrichtung nach Anspruch 4, wobei T1 und R2 jeweils mindestens gleich 90 % und/oder zwischen 90 und 95 % betragen.

6. Beleuchtungsvorrichtung nach Anspruch 1, wobei das Hilfsprisma eine einzige halbreflektierende Eintrittsfläche aufweist, welche die erste Eintrittsfläche ist, und die beiden rechtwinkligen Seitenflächen des Hilfsprismas der Austrittsfläche (fs_{A}) und der zweiten Eintrittsfläche (fe2_{A}) des Hilfsprismas entsprechen.

7. Beleuchtungsvorrichtung nach Anspruch 6, wobei die erste und die zweite Beleuchtungsquelle in rechtwinkligen Ebenen angeordnet sind, wobei eine der zweiten Eintrittsfläche zugeordnete Beleuchtungsquelle in einer Ebene liegt, die die Ebene der zweiten Eintrittsfläche (fe2_{A}) überlagert und parallel zu dieser ist, wobei die andere der ersten Eintrittsfläche (fe1_{A}) zugeordnete Beleuchtungsquelle zu einer Ebene parallel ist und die Ebene der Austrittsfläche (fs_{A}) des Hilfsprismas überlagert, wobei sich die erste Eintrittsfläche (fe1_{A}) zwischen der anderen Quelle und der Austrittsfläche befindet.

8. Beleuchtungsvorrichtung nach Anspruch 7, wobei die erste Eintrittsfläche (fe1A) der Tageslichtbeleuchtungsquelle (S_{D}) zugeordnet ist und eine halbreflektierende Behandlung aufweist, die so konfiguriert ist, dass sie einen Übertragungskoeffizienten T1 in Bezug auf einen Reflexionskoeffizienten R1 der Fläche begünstigt, wobei R1 + T1 = 100.

9. Beleuchtungsvorrichtung nach einem der Ansprüche 6 bis 8, wobei die Eintrittsstufe des Lichtleiters ein komplementäres gerades Prisma (PB) mit identischer Form wie das Hilfsprisma (PA) aufweist, wobei die beiden Prismen so aneinandergefügt sind, dass sie einen Quader bilden.

10. Beleuchtungsvorrichtung nach einem der Ansprüche 1 bis 9, wobei die zweite, Nacht-Beleuchtungsquelle (S_{N}) in einer Ebene parallel zu der und auf derselben Seite wie die Hauptaustrittsfläche (fs_{P}) des Leiters liegt.

11. Beleuchtungsvorrichtung nach einem der Ansprüche 1 bis 10, wobei das Hilfsprisma (P_{A}) durch Kleben mit dem Hauptquader (P_{P}) zusammengebaut ist.

12. Beleuchtungsvorrichtung nach einem der Ansprüche 1 bis 10, wobei der Hauptquader (P_{P}) und das Hilfsprisma (P_{A}) ein monolithisches optisches Teil bilden, das durch Gießen oder Zerspanung erzielt wird.

13. Beleuchtungsvorrichtung nach einem der vorhergehenden Ansprüche, wobei eine halbreflektierende Behandlung einer Eintrittsfläche eine Ablagerung von metallischen oder dielektrischen Dünnschichten auf der Oberfläche umfasst.

14. Beleuchtungsvorrichtung nach einem der vorhergehenden Ansprüche, wobei die der zweiten Beleuchtungsquelle zugeordnete optische Filterfunktion (F_{NVIS}) ein kollektiver Filter ist, der allen Dioden der Nachtquelle gemeinsam ist und durch eine Struktur aus dielektrischen Dünnschichten realisiert wird, die auf der Oberfläche der zweiten seitlichen Eintrittsfläche des Eintritts-Hilfsprismas abgelagert wird.

## Claims

1. A backlighting device (1) for a flat display screen of the liquid-crystal matrix array type, intended to be placed behind said liquid-crystal matrix array, said device being compatible with night-vision equipment, and containing at least:
a first lighting source (S_{D}) configured for a day-vision mode, formed of at least one row of light-emitting diodes (D_{D}) aligned parallel to a direction Y and emitting in a direction orthogonal to a source-carrier plane (Pcb_{D});
a second lighting source (S_{N}) configured for a night-vision mode, formed of at least one row of light-emitting diodes (D_{N}) aligned parallel to the direction Y and emitting in a direction orthogonal to a source-carrier plane (Pcb_{N}), with an optical filter (F_{NVIS}) suitable for making the light emitted by said second source compatible with the use of night-vision equipment; and
a light guide (GL) configured to diffuse, via a main output face (fs_{P}) arranged in a plane XY, the light delivered by the first or the second lighting source depending on which, day- or night-, vision mode is active, said light being for lighting a back face of said liquid-crystal matrix array;
the light guide (GL) comprising a main right-prism shape with rectangular bottom (b'_{P}) and top (b_{P}) bases forming a rectangular cuboid (P_{P}), the top base of said cuboid forming the main output face (fs_{P}) of the light guide, said rectangular cuboid comprising at least one lateral face (fe_{P}) arranged in a plane YZ, in a perpendicular manner to said main output face; and
the assembly of the light guide together with the first and the second lighting sources being such that the light emitted by each of the sources is injected into said main rectangular cuboid shape via said lateral face (fe_{P}) of said cuboid, named lateral face for injection, wherein
- the lateral face for injection of light (fe_{P}) into said main rectangular cuboid (P_{P}) of the guide is the same for the first and the second lighting sources; and
- the shape of the light guide (GL) is made up of two right-prism shapes end-to-end in a longitudinal direction of the guide, comprising said shape of a main rectangular cuboid (P_{P}) and an auxiliary right-prism shape, the base of which is an isosceles right-angled triangle (P_{A}), with a hypotenuse and two sides at right angles, defining, by construction, three rectangular-shaped lateral faces, two lateral faces of which being at right angles, where:
• a first lateral face is an output face (fs_{A}) for light from said auxiliary prism, said output face (fs_{A}) having the same rectangular dimensions as the lateral injection face (fe_{P}) of the main cuboid (P_{P}) to which it is bonded or with which it is coincident; and
• a second lateral face is a first light input face (fe1_{A}) for one lighting source among the first and the second lighting sources, towards the inside of said auxiliary right prism in the direction of another lateral face of the auxiliary prism;
• a third lateral face is a second light input face (fe2_{A}) for the other lighting source, towards the inside of said auxiliary prism in the direction of said first input face (fe1_{A}); and
- at least the first input face is semi-reflective, allowing reflection of the light transmitted via said second input face in the direction of said output face.

2. The lighting device according to claim 1, wherein said two lateral faces at right angles correspond to the first input face (fe1_{A}) and the second input face (fe2_{A}) of the auxiliary prism and they are semi-reflective, the first light input face (fe1_{A}) being a face for input of light from the associated lighting source in the direction of the second input face (fe2_{A}) and the second semi-reflective input face allowing reflection of the light transmitted via said first input face in the direction of said output face.

3. The lighting device according to claim 2, the first and second lighting sources being arranged in superposed parallel planes on either side of the auxiliary prism, parallel to the output face plane (fs_{P}) of the main rectangular cuboid, each facing one respective input face among the first and the second input faces of the auxiliary prism.

4. The lighting device according to one of claims 2 to 3, wherein the input face associated with the daytime lighting source features a semi-reflective treatment configured to favour a transmission coefficient T1 over a reflection coefficient R1 of said face, where R1 + T1 = 100, and the input face associated with the night-time lighting source features a semi-reflective treatment configured to favour a reflection coefficient R2 over a transmission coefficient T2 of said face, where R2 + T2 = 100.

5. The lighting device according to claim 4, wherein T1 and R2 are each at least equal to 90% and/or between 90 and 95%.

6. The lighting device according to claim 1, wherein the auxiliary prism has a single semi-reflective input face, which is the first input face, and said two lateral faces at right angles of the auxiliary prism correspond to the output face (fs_{A}) and the second input face (fe2_{A}) of the auxiliary prism.

7. The lighting device according to claim 6, wherein the first and second lighting sources are arranged in planes at right angles, one lighting source, associated with the second input face, being in a plane superposed over and parallel to the plane of said second input face (fe2_{A}), the other lighting source, associated with the first input face (fe1_{A}), being in a plane parallel to and superposed over the output face plane (fs_{A}) of the auxiliary prism, with the first input face (fe1_{A}) between said other source and said output face.

8. The lighting device according to claim 7, wherein the first input face (fe1_{A}) is associated with the daytime lighting source (S_{D}) and features a semi-reflective treatment configured to favour a transmission coefficient T1 over a reflection coefficient R1 of said face, where R1 + T1 = 100.

9. The lighting device according to any one of claims 6 to 8, the input stage of the light guide containing a complementary right prism (P_{B}), the shape of which is identical to that of the auxiliary prism (P_{A}), the two prisms being adjoined to one another so as to form a rectangular cuboid.

10. The lighting device according to any one of claims 1 to 9, wherein the second, night-time lighting source (S_{N}) lies in a plane that is parallel to and on the same side as the main output face (fs_{P}) of the guide.

11. The lighting device according to any one of claims 1 to 10, wherein the auxiliary prism (P_{A}) is joined to the main rectangular cuboid (P_{P}) by bonding.

12. The lighting device according to any one of claims 1 to 10, wherein the main rectangular cuboid (P_{P}) and the auxiliary prism (P_{A}) form a monolithic optical part obtained by moulding or machining.

13. The lighting device according to any one of the preceding claims, wherein a semi-reflective treatment of an input face comprises an operation of surface-depositing metal or dielectric thin films.

14. The lighting device according to any one of the preceding claims, wherein the optical-filter (F_{NVIS}) function associated with the second lighting source is a collective filter common to all of the diodes of the night-time source and formed by a dielectric thin-film structure surface-deposited on the second lateral input face of the auxiliary input prism.
